# EUROPÄISCHE PATENTSCHRIFT

(11) **EP 3 951 221 B1**
(45) Veröffentlichungstag und Bekanntmachung des Hinweises auf die Patenterteilung: **03.07.2024**
(21) Anmeldenummer: 21189340.9
(22) Anmeldetag: 03.08.2021
(51) Int. Cl.: F16K 7/12, F16K 31/00, F16B 2/10

(54) **VORRICHTUNG ZUR VERBINDUNG EINES VENTILANTRIEBS MIT EINER VENTILMEMBRAN**
DEVICE FOR CONNECTING A VALVE DRIVE WITH A VALVE MEMBRANE
DISPOSITIF DE LIAISON D'UN MÉCANISME DE COMMANDE DE SOUPAPE AVEC UNE MEMBRANE DE SOUPAPE

(30) Priorität: 05.08.2020 DE 102020120641
(43) Veröffentlichungstag der Anmeldung: 09.02.2022
(73) Patentinhaber: GEMÜ Gebr. Müller Apparatebau GmbH & Co. Kommanditgesellschaft, 74653 Ingelfingen (DE)
(72) Erfinder: Roos, Robin, 6343 Holzhäusern (CH); Steigert, Jochen, 6030 Ebikon (CH)
(74) Vertreter: DREISS Patentanwälte PartG mbB

(56) Entgegenhaltungen:
- EP-A1- 2 952 790
- DE-A1- 3 439 814

## Beschreibung

Die Erfindung betrifft eine Vorrichtung zur Verbindung eines Ventilantriebs mit einer Ventilmembran.

Verbindungstechniken zur Verbindung eines Ventilantriebs mit einer Ventilmembran mit einer dazwischen angeordneten Ventilstange sind allgemein bekannt.

DE 3439814 A1 offenbart eine achsialelastische Verbindung der Antriebsstange eines Stellantriebes mit einer Ventilstange eines Stellventils. Die Antriebsstange ist mit der Ventilstange über zur Längsachse der Stangen, nach innen geneigte Schrägflächen der einen Stange und auf letzteren gleitend verschiebbare schräge Gegenflächen von Profilteilen der anderen Stange kuppelbar.

EP 2 952 790 A1 offenbart ein Zwischenstück für ein Absperrorgan, insbesondere ein Membranventil, für Fluide. Ein Druckstück ist in dem Zwischenstück anordenbar. Das Druckstück weist wenigstens zwei Verriegelungsschieber zu einem Verriegeln eines Verriegelungsglieds eines Verschlusselements auf. Das Zwischenstück weist einen Zylinder auf, in dem das Druckstück axial führbar ist. Das Zwischenstück weist eine Ausnehmung auf, die derart angeordnet ist, dass in einer Montageposition des Druckstücks sich die Verriegelungsschieber in die Ausnehmung verlagern und damit das Verriegelungsglied freigeben.

Das der Erfindung zugrundeliegende Problem wird durch eine Vorrichtung gemäß dem Anspruch 1 gelöst. Vorteilhafte Weiterbildungen finden sich in den Unteransprüchen sowie in der nachfolgenden Beschreibung und in der Zeichnung.

Ein Aspekt der Beschreibung betrifft eine Vorrichtung zur Verbindung eines Ventilantriebs mit einer Ventilmembran, die Vorrichtung umfassend: einen Zwischenkörper mit Steuerabschnitten, welche innerhalb einer Durchgangsöffnung des Zwischenkörpers feststehend angeordnet sind; und einen wenigstens abschnittsweise innerhalb der Durchgangsöffnung beweglich angeordneten Adapter mit zwei Adapterelementen, welche um eine lotrecht zu einer Stellachse verlaufende Rotationsachse drehbar zu dem Adapter festgelegt sind, wobei der Stellachse zugewandte Verbindungskonturen der Adapterelemente in einer ersten Position des Adapters auf der Stellachse einen gemeinsamen Aufnahmeraum zur Aufnahme eines Befestigungsabschnitts der Ventilmembran begrenzen, und wobei ein jeweiliger Kontaktabschnitt des jeweiligen Adapterelements in einer zweiten Position des Adapters auf der Stellachse den zugeordneten Steuerabschnitt derart kontaktiert, sodass das jeweilige Adapterelement um die Rotationsachse in eine Montageposition gedreht ist, in welcher die Verbindungskonturen einen Montageraum, der größer als der Aufnahmeraum ist, begrenzen.

Durch die Steuerabschnitte wird das Verriegeln und Freigeben der Ventilmembran mit dem jeweiligen Hub der Ventilstange gekoppelt. Dadurch werden Montagefehler reduziert, da eine Verriegelung der Membran durch den Antrieb durchgeführt wird. Folglich kann der Antrieb sicher die gewünschte Montageposition zum Membranwechsel als auch die Verriegelungsposition für den Betrieb des Membranventils anfahren. Der Montageablauf wird also durch die Vorrichtung festgelegt. Vorteilhaft wird der Anschluss der Ventilmembran an den Antrieb dahingehend verbessert, als dass der Membranwechsel schneller vonstattengehen kann.

Des Weiteren ist es möglich, das Spiel zwischen Membranpin und Ventilstange zu reduzieren, indem die Verbindungskonturen und die Membranpin entsprechend aufeinander abgestimmt sind. Des Weiteren werden Kosten reduziert, da umständliche Lösungen zur Festlegung des Membranpins entfallen.

Die Erfindung zeichnet sich dadurch aus, dass wenigstens ein Federelement die zwei Adapterelemente derart vorspannt, sodass die zur Stellachse weisenden Verbindungskonturen der Adapterelemente in der ersten Position des Adapters entlang der Stellachse einen gemeinsamen Aufnahmeraum zur Aufnahme eines Befestigungsabschnitts der Ventilmembran begrenzen.

Durch das wenigstens eine Federelement wird gewährleistet, dass sich der Befestigungsabschnitt der Ventilmembran nicht ungewollt aus dem Aufnahmeraum löst.

Ein vorteilhaftes Beispiel zeichnet sich dadurch aus, dass das Adapterelement einen distalen Druckstückabschnitt umfasst, welcher zumindest abschnittsweise auf einen Membranabschnitt der Ventilmembran drückbar ist, und wobei der Druckstückabschnitt eine zentrale Öffnung aufweist, durch welche der ein Pin der Ventilmembran mit dem distalen Befestigungsabschnitt führbar ist.

Vorteilhaft ist die Festlegung des Befestigungsabschnitts der Ventilmembran von dem Druckstückabschnitt entkoppelt, womit zum einen ein sicherer Halt des Befestigungsabschnitts gewährleistet wird und zum anderen die Membran sicher auf einen Ventilsitz eines Ventilkörpers, mit dem der Zwischenkörper verbunden ist, gedrückt werden kann.

Ein vorteilhaftes Beispiel zeichnet sich dadurch aus, dass der Adapter einen antriebsseitigen Verbindungsabschnitt umfasst, um den Adapter mit einer Ventilstange des Ventilantriebs zu verbinden.

Vorteilhaft wird damit die Axialbewegung des Antriebs unmittelbar in den Adapter eingeleitet.

Ein vorteilhaftes Beispiel zeichnet sich dadurch aus, dass ein Adapterabschnitt den antriebsseitigen Verbindungsabschnitt mit einem zur Rotation der Adapterelemente ausgebildeten Drehlagerabschnitt starr verbindet.

Vorteilhaft wird durch diese Ausgestaltung der Vorrichtung das Antriebsmoment über den Drehlagerabschnitt und die Adapterelemente in den Pin der Ventilmembran eingebracht.

Ein vorteilhaftes Beispiel zeichnet sich dadurch aus, dass ein bzw. der Adapterabschnitt den antriebsseitigen Verbindungsabschnitt und den Druckstückabschnitt starr miteinander verbindet.

Vorteilhaft wird durch diese Ausgestaltung der Vorrichtung das Antriebsmoment über den Druckstückabschnitt in die Ventilmembran eingebracht, um die Ventilmembran sicher auf den Steg des Ventilkörpers aufzudrücken und damit das Membranventil sicher zu schließen.

Ein weiterer Aspekt der Beschreibung betrifft eine Verwendung der Vorrichtung gemäß dem ersten Aspekt.

Ein anderer Aspekt der Beschreibung betrifft ein Membranventil umfassend die Vorrichtung gemäß dem ersten Aspekt und die Ventilmembran.
- Figur 1: zeigt ein Membranventil in einer schematischen Schnittansicht; und
- Figuren 2 und 3: zeigen einen Zwischenkörper in einer schematischen Schnittansicht mit einem Adapter in einer jeweiligen Position.

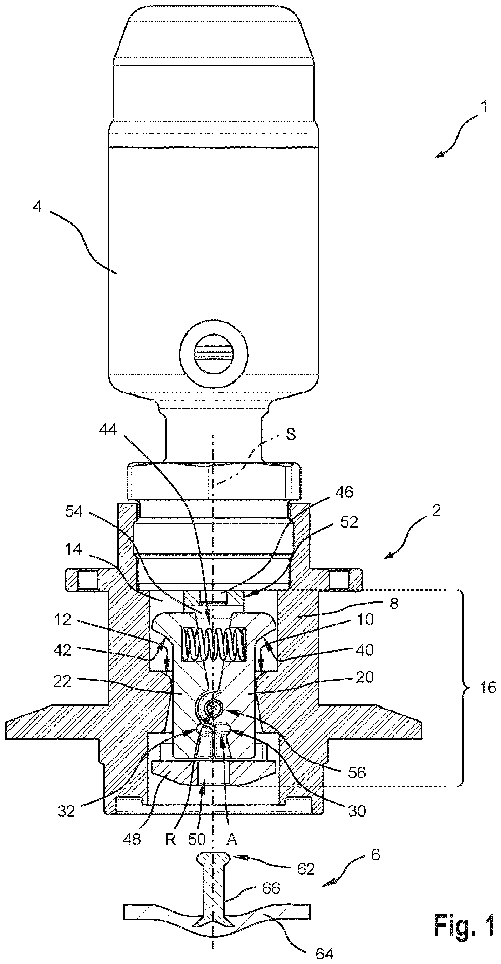

Nachfolgend wird eine Vorrichtung 2 unter Bezugnahme auf die Figuren 1 bis 3 beschrieben. Die Vorrichtung 2 ist dazu ausgebildet einen Ventilantriebs 4 mit einer Ventilmembran 6 zu verbinden.

Ein Zwischenkörper 8 umfasst sich gegenüberliegende Steuerabschnitte 10, 12, welche innerhalb einer Durchgangsöffnung 14 des Zwischenkörpers 8 feststehend angeordnet sind und in die Durchgangsöffnung hineinragen. Die Steuerabschnitte 10 und 12 sind beispielsweise Teil einer nach innen gewandten umlaufenden konvexen Fläche.

Ein wenigstens abschnittsweise innerhalb der Durchgangsöffnung 14 beweglich angeordneter Adapter 16 umfasst zwei klammerartig bewegbare Adapterelemente 20, 22. Die Adapterelemente 20, 22 sind um eine lotrecht zu einer Stellachse S verlaufende Rotationsachse R drehbar zu dem Adapter 16 gelagert und hinsichtlich der übrigen Freiheitsgrade zu dem Adapter 16 festgelegt.

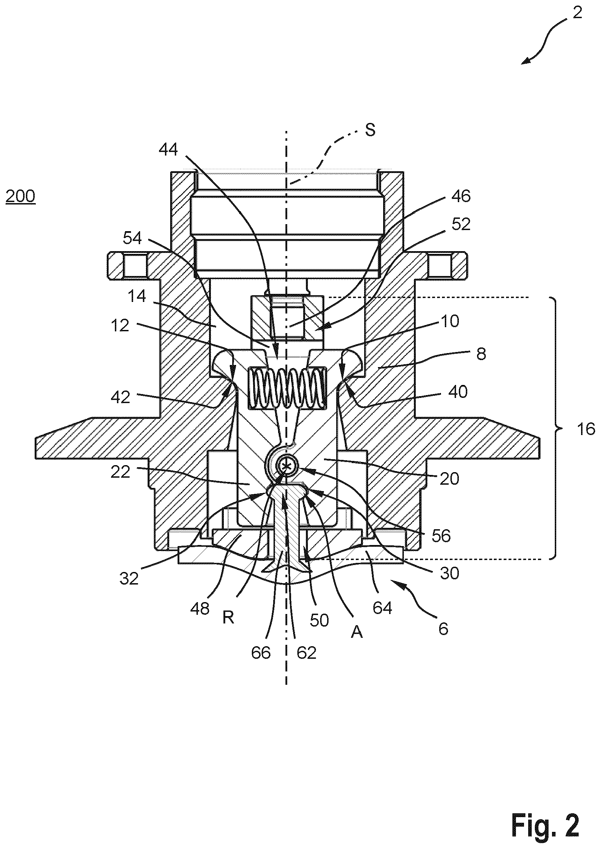

Der Stellachse S zugewandte Verbindungskonturen 30, 32 der Adapterelemente 20, 22 begrenzen einen gemeinsamen Aufnahmeraum A zur Aufnahme eines Befestigungsabschnitts 62 der Ventilmembran 6, wenn sich der Adapter 16 in einer in Figur 2 gezeigten ersten Position 200 auf der Stellachse S befindet.

Die Verbindungskonturen 30 und 32 umgreifen in der ersten Position 200 des Adapters 16 den distalen Befestigungsabschnitt 62 des Pins 66 der Ventilmembran 6 und legen den Pin 66 somit nahezu spielfrei zu dem Adapter 16 und zu einer Ventilstange 46 des Antriebs fest. Hierzu befinden sich die Adapterelemente 20 und 22 in einer Betriebsposition zueinander. Innerhalb des Aufnahmeraums A wird der Befestigungsabschnitt 62 festgelegt, so dass dieser über die Ventilstange 46, die von dem Antrieb angetrieben wird, entlang der Stellachse S bewegt werden kann.

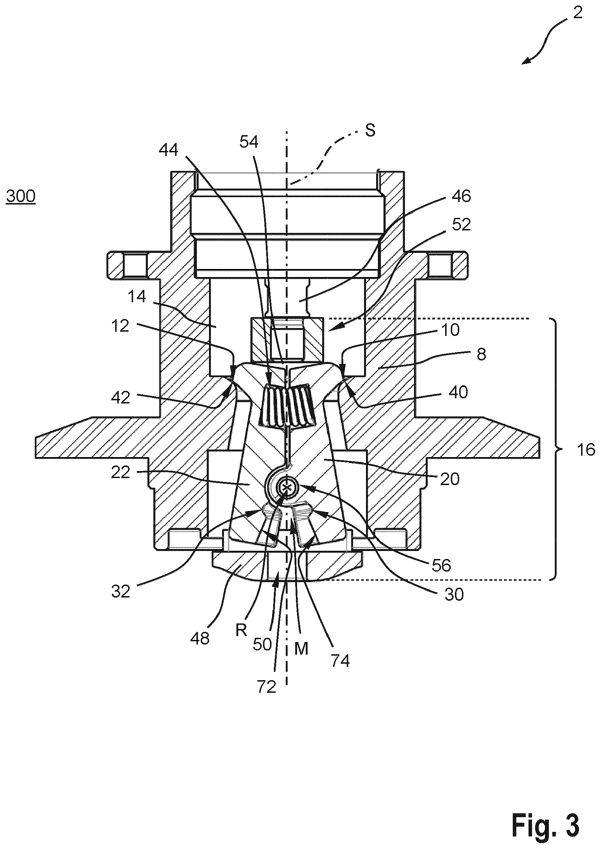

Ein jeweiliger Kontaktabschnitt 40, 42 des jeweiligen Adapterelements 20, 22 kontaktiert den zugeordneten Steuerabschnitt 10, 12, wenn sich der Adapter 16 gemäß Figur 3 in einer zweiten Position 300 auf der Stellachse S befindet. In der zweiten Position 300 kontaktierten die Kontaktabschnitte 40, 42 die Steuerabschnitte 10, 12 derart, sodass das jeweilige Adapterelement 22, 22 um die Rotationsachse R in eine Montageposition gedreht ist. In der Montageposition begrenzen die Verbindungskonturen 30, 32 einen Montageraum M, der größer als der Aufnahmeraum A ist. Der Montageraum M hat beispielsweise einen größeren zur Stellachse S lotrechten Durchmesser als der Aufnahmeraum A. Das Entfernen oder Einführen des distalen Befestigungsabschnitts 62 der Ventilmembran 6 ist durch den im Vergleich zum Aufnahmeraum A größeren Montageraum M möglich. In der zweiten Position 300 geben die Verbindungskonturen 30 und 32 den Befestigungsabschnitt 62 frei, so dass dieser aus dem Raum zwischen den Verbindungskonturen 30 und 32 entfernt werden kann. Die Adapterelemente 20 und 22 befinden sich also in der aus der Betriebsposition rotatorisch erreichten Montageposition zueinander.

Die Koppelung der Ventilmembran 6 ist durch den ersten Betätigungshub des Ventilantriebs ausgehend von der Position in Fig.1 hin zur Ventilmembran 6 durch ein Überschnappen gedacht. Hierzu wird der Adapter 16 in Richtung des Befestigungsabschnitts 62 bewegt. Hierbei trifft der Befestigungsabschnitt 62 auf in Figur 3 gezeigte Öffnungskonturen 72 und 74 der Adapterelemente 20 und 22. Der Befestigungsabschnitt 62 drückt auf die Öffnungskonturen 72 und 74 und öffnet damit den Adapter 16. Erreicht der Befestigungsabschnitt 62, wird der Adapter 16 durch die Federkraft geschlossen und der Adapter 16 umgreift den Befestigungsabschnitt 62 formschlüssig.

Die Öffnungskonturen 72 und 74 begrenzen einen Innenraum, der sich in Richtung der Ventilmembran 6 öffnet. Anders ausgedrückt begrenzen die Öffnungskonturen 72 und 74 einen sich zum Antrieb hin verjüngenden Raum. Die Öffnungskonturen 72 und 74 folgen beispielsweise abschnittsweise einem sich in Richtung Antrieb verjüngenden Kegelstumpf.

In einem anderen Beispiel wird der Adapter 16 durch einen axialen Hub entlang der Stellachse S von dem Ventilantrieb 4 weg hin zur Ventilmembran 6 geöffnet, um den Befestigungsabschnitt 62 der Ventilmembran 6 aufzunehmen. Durch einen weiteren axialen Hub des Adapters 16 zu dem Ventilantrieb 4 hin wird der Adapter 16 geschlossen und der Adapter 16 umgreift den Befestigungsabschnitt 62 formschlüssig.

In einem nicht gezeigten Beispiel bilden die distalen, vom Ventilantrieb 4 weggewandten Oberflächen der Adapterelemente 20 und 22 Druckstückabschnitte, um auf die Ventilmembran zu drücken. In diesem Beispiel entfällt der Druckstückabschnitt 48.

Wenigstens ein Federelement 44 spannt die zwei Adapterelemente 20, 22 derart vor, sodass die zur Stellachse S weisenden Verbindungskonturen 30, 32 der Adapterelemente 20, 22 in der ersten Position 200 des Adapters 16 entlang der Stellachse S einen gemeinsamen Aufnahmeraum A zur Aufnahme eines Befestigungsabschnitts 62 der Ventilmembran 6 begrenzen.

Das Federelement 44 ist zwischen den beiden Adapterelementen 20 und 30 aufgenommen und ist beispielsweise als Druckfeder ausgeführt. Die Adapterelemente 20 und 30 stellen aufeinander zugewandte Federaufnahmen in Form von Ausnehmungen bereit, um das Federelement 44 zu halten. Das Federelement 44 drückt die Adapterelemente 20 und 22 auf der einen Seite der Rotationsachse R auseinander und drückt die Adapterelemente 20 und 22 auf der Seite der Verbindungskonturen 30 und 32 aufeinander.

Die erste Position 200 des Adapters 16 in Figur 2 ist beispielsweise eine Schließposition der Ventilmembran 6. Durch ein Zurückziehen der Ventilmembran 6 in Richtung des Antriebs lässt sich das Membranventil 1 aus der Schließposition heraus öffnen.

Ein distaler Druckstückabschnitt 48 ist zumindest abschnittsweise auf einen elastischen Membranabschnitt 64 der Ventilmembran 6 drückbar. Der Druckstückabschnitt 48 umfasst eine zentrale Öffnung 50, durch welche der Pin 66 der Ventilmembran 6 mit dem distalen Befestigungsabschnitt 62 führbar ist.

Die Steuerabschnitte 10 und 12 sind auch als Steuerkurven bezeichenbar. Die Steuerabschnitte 10 und 12 sind Teil einer Verjüngung der Durchgangsöffnung 14.

Der Adapter 16 umfasst einen antriebsseitigen Verbindungsabschnitt 52, um den Adapter 16 mit einer Ventilstange 46 des Ventilantriebs 4 starr zu verbinden.

Die Adapterelemente 20 und 22 stellen gemeinsam mit dem Federelement 44, den Verbindungskonturen 30, 32 und dem Drehlagerabschnitt 56, an dem sich Adapterelemente 20 und 22 drehbar gelagert sind, eine Klammer dar, die über den Drehlagerabschnitt 56 mit der Ventilstange gekoppelt ist und damit entlang der Stellachse S bewegbar ist. Die Steuerabschnitte 10 und 12 bestimmen gemeinsam mit den Kontaktbereichen 40 und 42 sowie der Feder den Öffnungsgrad der Klammer in Abhängigkeit von der Position des Adapters 16 auf der Stellachse S.

Der Adapterabschnitt 54 verbindet den antriebsseitigen Verbindungsabschnitt 52 und den Druckstückabschnitt 48 starr miteinander. In einem Beispiel sind der Adapterabschnitt 54 und der Verbindungsabschnitt 52 einteilig ausgebildet. In einem anderen Beispiel sind der Adapterabschnitt 54 und der Verbindungsabschnitt 52 separat ausgebildet.

## Patentansprüche

1. Eine Vorrichtung (2) zur Verbindung eines Ventilantriebs (4) mit einer Ventilmembran (6), die Vorrichtung (2) umfassend:
einen Zwischenkörper (8) mit Steuerabschnitten (10, 12), welche innerhalb einer Durchgangsöffnung (14) des Zwischenkörpers (8) feststehend angeordnet sind; und
einen wenigstens abschnittsweise innerhalb der Durchgangsöffnung (14) beweglich angeordneten Adapter (16) mit zwei Adapterelementen (20, 22), welche um eine lotrecht zu einer Stellachse (S) verlaufende Rotationsachse (R) drehbar zu dem Adapter (16) festgelegt sind,
wobei der Stellachse (S) zugewandte Verbindungskonturen (30, 32) der Adapterelemente (20, 22) in einer ersten Position (200) des Adapters (16) auf der Stellachse (S) einen gemeinsamen Aufnahmeraum (A) zur Aufnahme eines Befestigungsabschnitts (62) der Ventilmembran (6) begrenzen, und
wobei ein jeweiliger Kontaktabschnitt (40, 42) des jeweiligen Adapterelements (20, 22) in einer zweiten Position (300) des Adapters (16) auf der Stellachse (S) den zugeordneten Steuerabschnitt (10, 12) derart kontaktiert, sodass das jeweilige Adapterelement (22, 22) um die Rotationsachse (R) in eine Montageposition gedreht ist, in welcher die Verbindungskonturen (30, 32) einen Montageraum (M), der größer als der Aufnahmeraum (A) ist, begrenzen, **dadurch gekennzeichnet, dass** wenigstens ein Federelement (44) die zwei Adapterelemente (20, 22) derart vorspannt, sodass die zur Stellachse (S) weisenden Verbindungskonturen (30, 32) der Adapterelemente (20, 22) in der ersten Position (200) des Adapters (16) entlang der Stellachse (S) den gemeinsamen Aufnahmeraum (A) zur Aufnahme des Befestigungsabschnitts (62) der Ventilmembran (6) begrenzen.

2. Die Vorrichtung gemäß dem Anspruch 1, wobei das Adapterelement (16) einen distalen Druckstückabschnitt (48) umfasst, welcher zumindest abschnittsweise auf einen Membranabschnitt (64) der Ventilmembran (6) drückbar ist, und wobei der Druckstückabschnitt (48) eine zentrale Öffnung (50) aufweist, durch welche ein Pin (66) der Ventilmembran (6) mit dem distalen Befestigungsabschnitt (62) führbar ist.

3. Die Vorrichtung (2) gemäß einem der vorigen Ansprüche, wobei der Adapter (16) einen antriebsseitigen Verbindungsabschnitt (52) umfasst, um den Adapter (16) mit einer Ventilstange (46) des Ventilantriebs (4) zu verbinden.

4. Die Vorrichtung (2) gemäß dem Anspruch 3, wobei ein Adapterabschnitt (54) den antriebsseitigen Verbindungsabschnitt (52) mit einem zur Rotation der Adapterelemente (20, 22) ausgebildeten Drehlagerabschnitt (56) starr verbindet.

5. Die Vorrichtung (2) gemäß dem Anspruch 2 und einem der Ansprüche 3 und 4, wobei ein bzw. der Adapterabschnitt (54) den antriebsseitigen Verbindungsabschnitt (52) und den Druckstückabschnitt (48) starr miteinander verbindet.

6. Eine Verwendung der Vorrichtung (2) gemäß einem der vorigen Ansprüche.

7. Ein Membranventil (1) umfassend die Vorrichtung (2) gemäß einem der Ansprüche 1 bis 5 und die Ventilmembran (6).

## Claims

1. Device (2) for connecting a valve drive (4) with a valve membrane (6), the device (2) comprising:
an intermediate body (8) with control sections (10, 12) which are arranged in a fixed manner within a passage opening (14) of the intermediate body (8); and
an adapter (16) arranged moveably, at least in sections, within the passage opening (14), with two adapter elements (20, 22) which are fixed so as to be rotatable in relation to the adapter (16) around an axis of rotation (R) running perpendicular to an actuating axis (S),
wherein, in a first position (200) of the adapter (16) on the actuating axis (S), connecting contours (30, 32) of the adapter elements (20, 22) facing the actuating axis (S) limit a common receiving space (A) to accommodate a fastening section (62) of the valve membrane (6), and
wherein, in a second position (300) of the adapter (16) on the actuating axis (S), a respective contact section (40, 42) of the adapter element (20, 22) makes contact with the assigned control section (10, 12) in such a way that the respective adapter element (22, 22) is rotated around the axis of rotation (R) into a mounting position in which the connecting contours (30, 32) limit a mounting space (M) which is larger than the receiving space (A), **characterised in that** at least one spring element (44) pre-tensions the two adapter elements (20, 22) in such a way that, in the first position (200) of the adapter (16) along the actuating axis (S), connecting contours (30, 32) of the adapter elements (20, 22) facing the actuating axis (S) limit the common receiving space (A) to accommodate the fastening section (62) of the valve membrane (6).

2. Device according to claim 1, wherein the adapter element (16) comprises a distal thrust piece section (48), which can be pressed, at least in sections, onto a membrane section (64) of the valve membrane (6), and wherein the thrust piece section (48) has a central opening (50) through which a pin (66) of the valve membrane (6) with the distal fastening section (62) can be passed.

3. Device (2) according to one of the preceding claims, wherein the adapter (16) comprises a drive-side connecting section (52) to connect the adapter (16) to a valve rod (46) of the valve drive (4).

4. Device (2) according to claim 3, wherein an adapter section (54) rigidly connects the drive-side connecting section (52) with a swivel bearing section (56) designed to rotate the adapter elements (20, 22).

5. Device (2) according to claim 2 and one of claims 3 and 4, wherein an, or the, adapter section (54) rigidly connects the drive-side connecting section (52) and the thrust piece section (48) with each other.

6. Use of the device (2) according to one of the preceding claims.

7. Membrane valve (1) comprising the device (2) according to one of the claims 1 to 5 and the valve membrane (6).

## Revendications

1. Dispositif (2) de liaison d'un entraînement de vanne (4) à une membrane de vanne (6), ledit dispositif (2) comprenant :
un corps intermédiaire (8) comprenant des sections de commande (10, 12) qui sont disposées de manière fixe à l'intérieur d'une ouverture de passage (14) du corps intermédiaire (8); et
un adaptateur (16) qui est disposé de manière mobile au moins par sections à l'intérieur de l'ouverture de passage (14) et comprend deux éléments d'adaptateur (20, 22) qui sont fixés de manière rotative par rapport à l'adaptateur (16) autour d'un axe de rotation (R) s'étendant perpendiculairement à un axe de réglage (S),
dans lequel, dans une première position (200) de l'adaptateur (16) sur l'axe de réglage (S), des contours de liaison (30, 32) des éléments d'adaptateur (20, 22), qui montrent vers l'axe de réglage (S) délimitent un espace de réception commun (A) destiné à recevoir une section de fixation (62) de la membrane de vanne (6), et
dans lequel, dans une deuxième position (300) de l'adaptateur (16) sur l'axe de réglage (S), une section de contact (40, 42) respective de l'élément d'adaptateur (20, 22) respectif entre en contact avec la section de commande (10, 12) associée de telle sorte que l'élément d'adaptateur (22, 22) respectif est tourné autour de l'axe de rotation (R) dans une position de montage dans laquelle les contours de liaison (30, 32) délimitent un espace de montage (M) qui est plus grand que l'espace de réception (A), **caractérisé par le fait qu'**au moins un élément faisant ressort (44) précontraint les deux éléments d'adaptateur (20, 22) de telle sorte que, dans la première position (200) de l'adaptateur (16) le long de l'axe de réglage (S), les contours de liaison (30, 32) des éléments d'adaptateur (20, 22), qui montrent vers l'axe de réglage (S) délimitent l'espace de réception commun (A) pour recevoir la section de fixation (62) de la membrane de vanne (6).

2. Dispositif selon la revendication 1, dans lequel l'élément d'adaptateur (16) comprend une section de pièce de pression distale (48) qui peut être pressée au moins par sections sur une section de membrane (64) de la membrane de vanne (6), et dans lequel la section de pièce de pression (48) présente une ouverture centrale (50) à travers laquelle peut être guidée une broche (66) de la membrane de vanne (6) avec la section de fixation distale (62).

3. Dispositif (2) selon l'une quelconque des revendications précédentes, dans lequel l'adaptateur (16) comprend une section de liaison côté entraînement (52) afin de relier l'adaptateur (16) à une tige de vanne (46) de l'entraînement de vanne (4).

4. Dispositif (2) selon la revendication 3, dans lequel une section d'adaptateur (54) relie rigidement la section de liaison côté entraînement (52) à une section de palier de pivot (56) conçue pour la rotation des éléments d'adaptateur (20, 22).

5. Dispositif (2) selon la revendication 2 et l'une quelconque des revendications 3 et 4, dans lequel une ou bien la section d'adaptateur (54) relie rigidement entre elles la section de liaison côté entraînement (52) et la section de pièce de pression (48).

6. Utilisation du dispositif (2) selon l'une quelconque des revendications précédentes.

7. Vanne à membrane (1) comprenant le dispositif (2) selon l'une quelconque des revendications 1 à 5 et la membrane de vanne (6).
